# EUROPEAN PATENT APPLICATION

(11) **EP 4 811 310 A1**
(43) Date of publication of application: **23.09.2026**
(21) Application number: 25165030.5
(22) Date of filing: 20.03.2025
(51) Int. Cl.: G06V 20/59, B60K 28/06, G06V 40/18

(54) **SYSTEM AND METHOD FOR MONITORING VEHICLE OCCUPANT CONDITION**

(71) Applicant: Aptiv Technologies AG, 8200 Schaffhausen (CH)
(72) Inventor: HASECKE, Frederik, 42719 Solingen (DE); WEYERS, Patrick, 44388 Dortmund (DE); MEDINA, Jose Manuel, 42285 Wuppertal (DE)
(74) Representative: Lewis Silkin LLP

(57) **Abstract**

A technique of monitoring the condition of a vehicle occupant is presented. The technique monitors a combination of characteristics of eyes an occupant of the vehicle, and associated illumination conditions, to determine the occupant's condition, and cause a vehicle function to be performed in dependence upon the determined condition.

## Description

### Field

The present disclosure relates to monitoring systems for vehicle occupants, and more particularly to a monitoring system, method, and computer program for determining a condition of a vehicle occupant based on eye characteristics and illumination conditions.

### Background

Effective driver monitoring is mission-critical for ensuring road safety. In this regard, vehicle safety systems have evolved significantly over the years, with increasing focus on monitoring the real-time condition of vehicle occupants in order to determine with driver assistance functions should be performed.

Vehicle accidents often occur due to driver inattention or drowsiness. A Driver Monitoring System (DMS), integrated into some vehicles, uses in-vehicle cameras and other sensors combined with computer vision to detect these states by monitoring driver behaviour, combined with other technologies such as steering wheel grip sensors and lane departure warning systems. Preventative or corrective actions can be taken as a result.

Existing camera-based monitoring systems typically use visible light cameras to analyze facial features and expressions. However, these systems overlook the link between a vehicle occupant's characteristics and the external environment, posing challenges in complex lighting scenarios.

Embodiments of the present disclosure are developed in this context and integrate information obtained by monitoring eyes of vehicle occupants with the prevailing illumination conditions. This enables determination of whether the physiological response of the occupants to the illumination condition suggests that particular action should be taken.

### Summary

According to a first aspect, there is provided a monitoring system, comprising: a camera system arranged to determine illumination conditions of the interior of a vehicle, and to obtain one or more characteristics of eyes an occupant of the vehicle; and an interpretation module arranged to determine a condition of the occupant based on the characteristics of the occupant's eyes and the associated illumination conditions, and to cause a vehicle function to be performed in dependence upon the condition of the occupant.

In this way, full insights can be gained into various conditions that might impair a driver's ability to operate a vehicle safely. Insights into passengers can also, or alternatively, be considered, in order to determine whether a particular vehicle function should be performed. By integrating illumination data with eye characteristic information, it is possible to ensure that appropriate vehicle functions are selected which address a situation associated with the cause of a particular eye characteristic in combination with an illumination condition.

In embodiments, the camera system is arranged to capture infra-red images and RGB images, and the camera system is arranged to determine the one or more characteristics of the occupant's eyes from the infra-red images, and to determine the associated illumination conditions from the RGB images. The use of both infrared and RGB images enables the system to capture eye characteristics in low-light conditions.

In embodiments, the one or more characteristics of the occupant's eyes include at least one of the size of the occupant's pupils, the gaze direction, separation of the occupant's eyelids, blink rate and blink frequency. In this way, a variety of characteristics such as drowsiness or medical conditions can be identified.

In embodiments, the interpretation module is arranged to determine the condition of the occupant by determining a degree of correlation between a change in the illumination conditions, and a change in the one or more characteristics of the occupant's eyes. In this way, it can be determined whether the occupant's response to conditions such as glare or low lighting is within expectations, or suggests an underlying medical condition.

In embodiments, the interpretation module is arranged to execute a machine-learning algorithm, trained using combinations of one or more characteristics of eye characteristics and associated illumination conditions, to determine the condition of the occupant. In this way, the system can be trained to recognize complex patterns and improve its accuracy over time, potentially adapting to individual occupant behaviours.

In embodiments, the interpretation module is arranged to access one or more additional information sources, and is arranged to determine the condition of the occupant based on the one or more characteristics of the occupant's eyes and the associated illumination conditions in combination with information from the one or more additional information sources, wherein the additional information sources comprise at least one of: vehicle interior characteristics; characteristics of the occupant; vehicle location; vehicle state; and environmental conditions. By incorporating additional information sources, the system may provide a more holistic assessment of the occupant's condition, taking into account various factors that could influence both eye behaviour and illumination conditions.

In embodiments, the characteristics of the occupant include at least one of body temperature, heart rate, breathing rate, and head position.

In embodiments, the vehicle interior characteristics include air temperature, air quality, and audio captured by one or more microphones.

In embodiments, the vehicle state comprises speed, acceleration, heading, and steering wheel position.

In embodiments, the interpretation module is arranged to determine the presence of external structures affecting illumination conditions from the vehicle location and map information.

In embodiments, the environmental conditions include weather conditions, time of day, time of year, and angle of sunlight.

In embodiments, the interpretation module is arranged to resolve the occupant's condition into one or more of: a temporary condition in which one or more characteristics of the occupant's eyes are temporarily affected by a change in illumination conditions; a critical condition in which one or more characteristics of the occupant's eyes have low dependence or no dependence on illumination conditions; wherein the interpretation module causes a first vehicle function to be performed if a temporary condition is detected, and causes a second vehicle function to be performed if a critical condition is detected.

In embodiments, the first vehicle function includes one or more of braking, limiting maximum speed, increasing a level of lane-keeping assistance, outputting a warning notification, activating an anti-glare system; and wherein the second vehicle function includes one or more of a parking manoeuvre, activating hazard lights, limiting vehicle engine function, requesting assistance from a remote entity, and one or more vehicle or occupant safety protocols parking manoeuvre. In this way, the action to be taken is appropriate to the severity of the condition which is identified.

In embodiments, the interpretation module is arranged to initiate determination of one or more characteristics of the occupant's eyes in response to determining a change in illumination conditions. In this way, it is possible to allow the system to conserve resources during stable conditions while ensuring timely assessments when needed, improving efficiency and responsiveness.

According to a second aspect, there is provided a monitoring method, comprising: determining illumination conditions of the interior of a vehicle; obtaining one or more characteristics of eyes an occupant of the vehicle; determining a condition of the occupant based on the characteristics of the occupant's eyes and the associated illumination conditions, and causing a vehicle function to be performed in dependence upon the condition of the occupant.

### Brief Description of Drawings

Illustrative embodiments will now be described with reference to the drawings in which:
Figure 1 shows a monitoring system according to a first embodiment of the present disclosure; and
Figure 2 shows a method of monitoring a vehicle according to a second embodiments of the present disclosure.

### Detailed Description

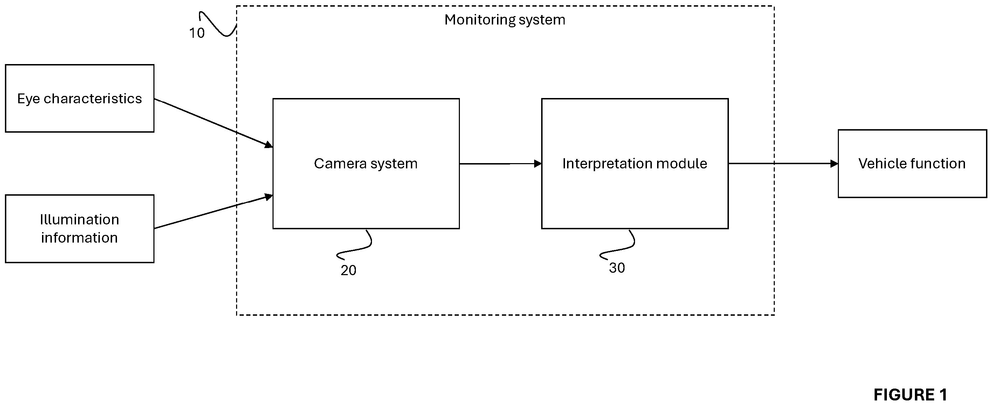

Figure 1 shows a monitoring system 10 according to a first embodiment of the present disclosure. The monitoring system 10 comprises a camera system 20 and an interpretation module 30. In general terms, the camera system 20 operates to determine illumination conditions of the interior of a vehicle, and characteristics of eyes an occupant of the vehicle, and may output a time-series of each of illumination conditions and eye characteristics. The interpretation module 30 operates to determine a condition of the occupant based on the characteristics of the occupant's eyes and the associated illumination conditions. In dependence upon the determined condition of the occupant, the interpretation module 30 causes an appropriate vehicle function to be performed.

In some embodiments, the monitoring system 10 is hosted entirely by the vehicle, with the operations of the interpretation module 30 performed by one or more electronic control units of a control system of the vehicle, and the camera system 20 including on-board vehicle cameras such as those of a cabin monitoring system (CMS). In other embodiments, at least some of the functionality of the interpretation module 30 is performed by a remote computing system hosted in, for example, a cloud, the monitoring system 10 further comprising a communication module for conveying sensor data and receiving the result of the interpretation.

For ease of description, embodiments of the present disclosure are explained in the context of monitoring pupil sizes of the eyes of a driver of a vehicle. Alternatives and modifications to this embodiment are set out in detail thereafter. By measuring and analyzing pupil size, it is possible to gain full system insights into various conditions that might impair a driver's ability to operate a vehicle safely.

The camera system 20 of the monitoring system 10 is used to capture images from which a driver's pupil sizes, and changes to the pupil sizes, can be determined. In some embodiments, the camera system includes infra-red (IR) cameras which can capture precise pupil measurements, independent of ambient lighting conditions, and even in complete darkness. Advantageously, use of IR cameras ensures that no auxiliary lighting, such as a camera flash, is required to illuminate the driver's eyes that could affect characteristics of the driver's eyes in a way which would makes a response to ambient lighting difficult to determine. In embodiments, the camera system 20 operates continuously.

The monitoring system 10 operates to process the images captured by the camera system. The images can be processed by a dedicated image-processing module within the camera system 20, logically arranged between the camera sensors of the camera system, 20 and the interpretation module 30.

The image processing module detects the driver's face and eye region in one of the input images. To calculate the driver's face position, an artificial neural network-based object detector or an image feature detector can be used. In the same or a following step, the eye regions are located in the image. In embodiments, this is performed using a landmark detection algorithm which uses only a cropped face region of the driver or is calculated together with the face detection in one step.

A pupil detection algorithm is used by the image processing module on the image parts where the eyes of the person are visible. When the pupil is detected, the pupil size is calculated by measuring the diameter of the detected pupil. The diameter can be calculated in absolute values, expressed in units such as millimeters or a number of pixels, depending on the calibration of the camera system. Alternatively, a relative pupil size can be calculated with respect to another feature, such as nose length, which can also be derived from the facial landmarks. The diameters are stored for each eye individually in a buffer for later use, and the buffer is cleared periodically or overwritten when full.

The pupil determination process is repeated for multiple captured images, so that the difference between current pupil diameters and previous pupil diameters can be calculated. Depending on the position of the camera system inside the vehicle and the resulting position of the eyes in the camera image, camera and sensor specifications, such as lens distortion or parameters contained in an intrinsic matrix of the camera, can be taken into account to correct for more precise measurements.

In addition to pupil size, illumination information is also captured by the camera system 20. In some embodiments, illumination information is derived from calculation of the exposure of images captured by the IR camera. In some embodiments, illumination information is captured using an RGB camera system which combines information for light of red (R), green (G) and blue (B) visible wavelengths, from which exposure changes can be determined. Ambient light is affected by external conditions such as lights from oncoming traffic, the environment of the vehicle, such as tunnels or brightly-lit urban areas, the time of day, the time of year, and weather conditions.

In embodiments, RGB images are processed by the image-processing module by comparison of average pixel values with a threshold, in order to determine an illumination level.

In embodiments, only the exposure changes of the eyes are significant, and so it is possible to determine exposure only of cropped image regions, saving processing resources.

The interpretation module 30 collects information relating to the determined illumination level corresponding to the time at which a particular pupil measurement is taken. To this effect, images from the both the IR camera and the RGB camera may be time-stamped, so that they can be synchronised in their processing by the interpretation module. In alternative embodiments, the images are indexed, and synchronization is inferred from a correspondence between index positions. The interpretation module 30 uses a combination of illumination information and pupil size to determine a condition of the driver.

In order to make such a determination, the interpretation module 30 executes an algorithm with which the driver's behavioural characteristics can be determined or classified. In embodiments, the algorithm is a machine learning algorithm, based on a support vector machine (SVM), or an artificial neural network (ANN), which is trained to interpret the pupil behavior based on the inputs of e.g., illumination, illumination change, pupil size, pupil contraction/dilation velocity and pupil movement. In other embodiments, a rule-based algorithm, or lookup table, converts inferred behaviour patterns into person states.

A change in exposure of the eyes is normally be expected to trigger a change of the size of the pupil that cannot be prevented. From these changes of the pupil size, or the lack of such a change, various inferences about the person's condition can be derived. By determining pupil sizes and reactions in combination with illumination information such as the exposure of the driver's face, it is possible to determine whether the driver is presenting a physiological response which is as would usually be expected under normal circumstances. If the response is as would be expected, it may be that no further action needs to be taken. If the response is not as expected, it may be that one or more of a variety of actions should be taken, examples of which are set out below.

In some situations, the co-existence of a particular illumination condition and a corresponding pupil size can be interpreted as being associated with a temporary condition which is not of concern. As an example, a driver may have been dazzled by full beam headlights of an oncoming driver. The interpretation module 30 is able to distinguish such a situation from a more general lack of responsiveness that may indicate that the driver is fatigued or drowsy, so that particular actions that may be associated with a lane-keeping routine, or identifying nearby service station are not unnecessarily invoked in response to a temporary condition.

The following are examples of the inferences that can be made by the interpretation module 30, according to embodiments of the present disclosure. Further examples which fall within the scope of the claims will be apparent to those skilled in the art, based on the teaching of the present disclosure.

### Example 1:

The driver is blinded by light shining directly into his or her eyes, originating from low-angle sunlight or oncoming headlights. The light is captured by the RGB camera, while the IR camera detects that eyelids are narrowing, and the pupils are contracting quickly. A glare condition is identified, which is classified as a temporary blindness condition.

### Example 2:

The driver is blinded by a rapid change from an illuminated area to a dark area, such as entering a tunnel or a dimly lit side road. A rapid change in ambient light is detected by the RGB camera, while the IR camera detects pupils dilating rapidly, with the eyes either narrowing or opening wide. A darkness transition condition is identified, which is classified as a temporary blindness condition.

### Example 3:

The driver is unable to adapt to rapidly changing illumination. This can be caused by driving on an avenue with trees that create a flickering light effect. The IR camera detects pupils rapidly dilating and contracting; eyelids may flicker, and gaze might be averted. The RGB camera captures rapid changes in illumination. A rapid change condition is identified, which is classified as a temporary blindness condition.

### Example 4:

The driver has difficulty seeing in low-light or dark conditions. This example contrasts with example 2, as the darkness is not a transition but an ongoing characterization of the environment. The IR camera detects pupils which are maximally dilated, with unfocused gaze. A night blindness (nyctalopia) condition is identified, which is classified as a temporary blindness condition.

### Example 5:

The driver is blinded by reflections, represented by rapid changes in glare. The reflections can be caused by surfaces such as windows, mirrors, puddles or snow, with the RGB camera confirming high ambient light conditions or rapid changes in illumination. The IR camera determines that pupils are already contracted, or rapidly dilating and contracting, or flickering. A reflection condition is identified, classified as causing temporary blindness.

### Example 6:

Abnormal pupil behaviour is determined, which can be caused by a variety of health issues such as brain injury, neurological disorders or ocular diseases. In such circumstances, abnormal pupil size consistency, unequal pupils, and pupils which are not reactive to expected changes are identified by the IR camera, and unexpected pupil size changes for the external illumination are confirmed by the RGB camera. An underlying health condition is identified which is classified as a critical condition.

### Example 7:

The use of certain substances such as alcohol, cannabis and opioids can significantly alter pupil behaviours. The IR camera detects unusual pupil sizes that do not correspond to current light exposure. Unexpected pupil size changes for the external illumination are confirmed by the RGB camera. An intoxication condition is identified, which is classified as a critical condition.

### Example 8:

Strong emotions, such as anger, fear or excitement, can cause physiological changes, including pupil dilation. The IR camera presents a baseline pupil size that may infers such emotions, or may detect sudden dilation indicating emotional arousal. The RGB camera confirms that such changes in pupil size are not caused by illumination changes. A state of emotion or stress is identified, which may be classified as either a critical condition or a temporary blindness condition, depending on the specific inference of emotional arousal that is made.

### Example 9:

Fatigue or drowsiness, associated with sleep deprivation or long driving hours, affects the ability to maintain focus and can lead to slower pupil responses. Consistently large pupils or slow reactions to changes in ambient light, blinking frequency, long blink durations, or drooping eyelids are detected by the IR camera, and the RGB camera confirms such unexpected changes in pupil size with external illumination. A fatigued, drowsy or low alertness condition is identified, which is classified as a critical condition.

### Example 10:

Sudden medical issues, such as a stroke, seizure, diabetic emergency, can cause noticeable changes in eye behaviour. The IR camera detects that pupils are suddenly unresponsive or asymmetric, with a lack of co-ordinated eye movement or fixed gaze. The RGB camera confirms such unexpected changes in pupil size with external illumination. A potential medical emergency may be identified, although it is to be understood that such a diagnosis is not to take the place of a formal diagnosis made by a medical professional. A critical condition may nonetheless be identified.

Each of the examples set out above can be considered as an abnormal condition, having varying degrees of severity. The interpretation module 30 can also detect a normal condition in which no temporary blindness or critical factors are identified, and pupil sizes correlate with normal behaviour, while illumination conditions are good, such as daylight, without sudden changes or glare.

In view of the variety of conditions which can be determined by the interpretation module 30, a corresponding variety of actions can be taken as a result of the determinations. The actions are generalized as vehicle functions. In embodiments, the vehicle functions include one or more of braking, limiting maximum speed, increasing a level of lane-keeping assistance, outputting a warning notification, activating an anti-glare system. Such actions are particularly appropriate if a temporary blindness condition is identified, offering temporary assistance to the driver or providing a warning to other road-users.

In embodiments, the vehicle functions include a parking manoeuvre, activating hazard lights, limiting vehicle engine function, requesting assistance from a remote entity, and one or more vehicle or occupant safety protocols. For example, post-crash reports such as those defined by organisations such as the European New Car Assessment Programme (NCAP), can be developed which are populated with information relating to the status of vehicle occupants before or after an event such as crash, if system integrity is such that personal information can be treated with the required levels of security and confidentiality. Such actions are particularly appropriate if a critical condition is identified, so as to maximise the safety of the occupants of the vehicle, other road-users and pedestrians by taking preventative action to prevent an accident.

In embodiments, the interpretation module 20 illustrated in Figure 1 determines the vehicle function to be performed, based on the same algorithm as that used to infer the driver condition, although in alternative embodiments, a separate algorithm or look-up table may be used. The vehicle function need not be performed directly by the monitoring system 10, but is instructed to be performed, for example, by outputting a control signal from the interpretation module 20 to a vehicle control system, or other vehicle system such as an infotainment system, head-up display, or automated driver assistance function.

The embodiments set out above are described in connection with determining the condition of a driver. In embodiments, the monitoring system 10 operates analogously to determining the condition of other vehicle occupants. For example, a vehicle function such as display of an alert can be performed if the interpretation module 20 determines that a passenger's pupils are not responding as expected, so that this can be brought to the driver's attention. In this way, the driver can take necessary action, such as driving to a parking location, without having previously been distracted from driving by continuously monitoring the condition of the passenger. This is particularly advantageous in relation to passengers sitting in the rear seats where the driver may otherwise be unaware of a potentially critical situation.

In the described examples of conditions which can be identified by the interpretation module 30, it will be understood that inferences can be made both on the correlation between the size of a person's pupils and the current illumination conditions, and based on changes between the sizes of the person's pupils and changes in illumination conditions, particularly a correlation between the respective rates of change. A rate of change may be expressed as a change in exposure or eye characteristic that is greater than a threshold value, when measured over a predetermined number of image frames or a predetermined time period. Analysis of both eyes of a person can be performed, and either an averaging algorithm, or a logical OR can be performed to represent the making of an inference of the condition of a vehicle occupant based on abnormal behaviour of either one or both of the occupant's eyes.

In the described examples, reference is made to the possibility of determining other characteristics of a person's eyes, and in embodiments, the camera system 20 is capable of identifying one or more of the following: the size of the occupant's pupils, the gaze direction, separation of the occupant's eyelids, blink rate and blink frequency. Each characteristic may be identified by a dedicated algorithm, or by a single general-purpose feature recognition algorithm. The feature recognition algorithm may be calibrated for a particular user, and adapted to compensate for people wearing glasses. Where IR camera systems are used, it can be possible to observe characteristics of a person's eyes even when sunglasses or tinted-lens glasses are worn.

The camera systems which are described above may be implemented by a single RGB camera and a single IR camera, or groups of RGB and IR cameras distributed around the cabin of the vehicle. In embodiments, combined RGB-IR cameras are used, in which specific light filters are applied to some pixels to capture only red, green, and blue light without, or with reduced influence of other wavelengths, while other pixels have no filter to capture the full spectral range of light, including infrared wavelengths. Illumination conditions and eye characteristics can be obtained from a single image using such cameras. As an alternative to IR camera systems, Near-Infrared (NIR) camera systems can be used, operating in a spectrum from above 780nm to around 11nm.

In embodiments, the determination of one or more characteristics of a person's eyes is a process which is initiated in response to determination of a change in illumination condition by the camera system 20. In such embodiments, it may not be necessary to determine and process eye characteristics if ambient lighting is static, such as that experienced when driving on an open road on a cloudy day, free of direct sunlight and reflective surfaces. In such cases, processing resources can be conserved. In alternative embodiments, determination of the characteristics of a person's eyes may be periodically initiated to ensure that critical incidents are not missed.

In embodiments, interpretation of the condition of a vehicle occupant can be supplemented by use of additional sources of information, which feed the interpretation module 30. A variety of different additional sources can be consulted, generalised as at least one of vehicle interior characteristics, characteristics of the occupant, vehicle location, vehicle state, and environmental conditions. The additional information sources provide insight into potential causes of illumination changes and/or eye characteristics, which enable a richer assessment of a person's condition to be determined. Such additional information is also useful if the measured exposure of a person's eyes is affected by shadows which may not reflect the wider ambient conditions.

For example, characteristics of the occupant may include at least one of body temperature, heart rate, breathing rate, and head position, each sensed by a sensor such as that of the occupant's smart devices such as phones or watches, microphones, or information obtained from the camera system or one or more additional camera systems. Such information may enable determination of whether an occupant is experiencing a medical issue, is affected by recreational substances, is looking into a mirror or out of the window to assist with parking, and so on, which can assist with classification of the occupant's condition.

Vehicle interior characteristics may include air temperature, air quality, and audio captured by one or more microphones. Poor air quality, for example, in combination with a high breathing rate may be used to confirm that condition or one or more of the vehicle occupants condition is poor and that action should be taken accordingly.

The vehicle state may be measured in dependence upon at least sensed speed, acceleration, heading, and steering wheel position. Any one or a combination of these parameters may signify that the driver is fatigued or intoxicated. For example, if driver inputs are erratic or steering wheel position, in combination with information from a camera system used to determined lane alignment, the interpretation module 30 determines that the vehicle is drifting out of its lane.

Vehicle location information may be used to confirm whether a particular illumination condition is in accordance with expectations. For example, if a low lighting condition is detected, the vehicle's location, as measured using Global Positioning System technology, may be correlated with map information to confirm that the vehicle is in, for example, a tunnel, and that a prolonged period of low lighting is to be expected. Similarly, switchbacks on a mountain road can be identified on a map which may be associated with frequent reversals of the sun direction, and can confirm the reason why characteristics of a driver's eyes may be changing periodically.

Knowledge of weather conditions, time of day, and season can be used by the interpretation module to confirm expected levels of illumination, the possibility of low-angle sun shining into a driver's eyes, such as that experienced in winter, or at sunrise or sunset, lightning events, and so on. From this, context can be determined by the interpretation module 30 as to the expected condition of a driver. For example, if the interpretation module 30 knows that the vehicle is in an area associated with a warm climate, and it is summer, and midday, the vehicle may be expected to be hot. If a high cabin temperature is sensed, it might be determined that air conditioning is not functioning correctly, and that the driver is at risk of discomfort or adopting an unsafe posture, and such information and supplement any interpretation based on eye characteristics and illumination to confirm the condition of the driver.

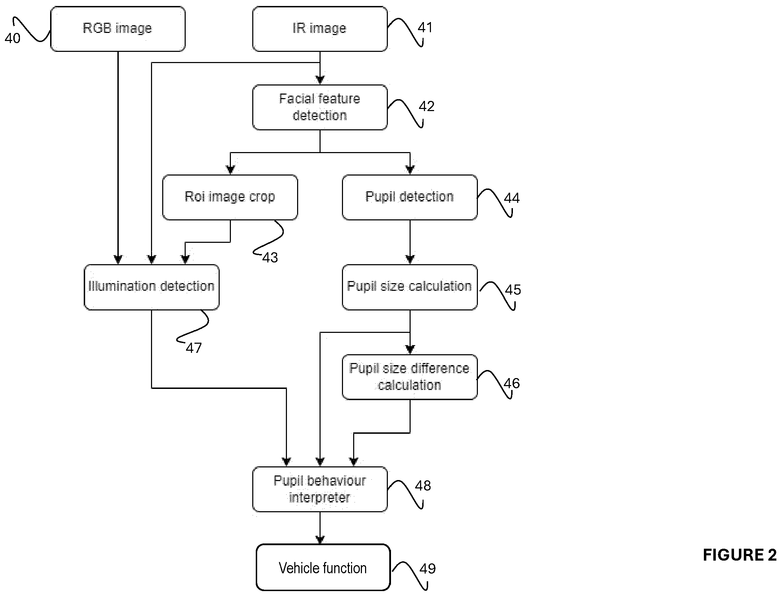

Figure 2 shows a method of monitoring a vehicle according to a second embodiment of the present disclosure. The method is implemented by one or more processors, representing the interpretation module 30 of Figure 1, executing computer-readable instructions.

The method of the second embodiment begins with the capture of an RGB image 40 and an IR image 41 of the interior of a vehicle, using an implementation of the camera system 20 of Figure 1. The RGB image 40 is used for illumination detection, particularly determination of exposure from light in visible wavelengths. The IR image 41 is processed in order to obtain information relating to characteristics of a person's eyes, particularly their pupil size.

A facial feature detection algorithm 42 is used in order to determine regions of interest (Roi) of the IR image 41 which contain the person's eyes. The IR image 41 is cropped to the region of interest in a cropping routine 43, and illumination detection is also applied to the cropped IR image in step 47. This enables detailed illumination information to be determined, even in low lighting.

From the IR image to which facial feature detection 42 is applied, pupil detection 44 is performed in order to identify a person's pupils within their face. Pupil size calculation 45 is performed on the detected pupils, and a determination is made as to the extent to which a pupil size has changed, based on historical pupil sizes determined in previous performances of step 45.

The illumination detection information 47, and pupil size difference calculation 36 are fed into the interpretation module 48 for the behaviour determination in step 48, and an appropriate vehicle function is selected in step 49, based on the interpretation of the person's behaviour. In embodiments, if no abnormal behaviour is determined, it may be that no vehicle action is required in step 49.

Although, in embodiments, pupil size difference is taken into account by the interpretation module 30, in some embodiments, absolute pupil size is taken into account, either instead or, or in addition to pupil size change information. This is represented in Figure 2 by the link between the output of step 45 and step 48.

## Claims

1. A monitoring system, comprising:
a camera system arranged to determine illumination conditions of the interior of a vehicle, and to obtain one or more characteristics of eyes an occupant of the vehicle; and
an interpretation module arranged to determine a condition of the occupant based on the characteristics of the occupant's eyes and the associated illumination conditions, and to cause a vehicle function to be performed in dependence upon the condition of the occupant.

2. A monitoring system according to claim 1, wherein the camera system is arranged to capture infra-red, images and RGB images, wherein the camera system is arranged to determine the one or more characteristics of the occupant's eyes from the infra-red images, and to determine the associated illumination conditions from the RGB images.

3. A monitoring system according to claim 1 or claim 2, wherein the one or more characteristics of the occupant's eyes include at least one of the size of the occupant's pupils, the gaze direction, separation of the occupant's eyelids, blink rate and blink frequency.

4. A monitoring system according to any one of the preceding claims, wherein the interpretation module is arranged to determine the condition of the occupant by determining a degree of correlation between a change in the illumination conditions, and a change in the one or more characteristics of the occupant's eyes.

5. A monitoring system according to claim 4, wherein the interpretation module is arranged to execute a machine-learning algorithm, trained using combinations of one or more characteristics of eye characteristics and associated illumination conditions, to determine the condition of the occupant.

6. A monitoring system according to any one of the preceding claims, wherein the interpretation module is arranged to access one or more additional information sources, and is arranged to determine the condition of the occupant based on the one or more characteristics of the occupant's eyes and the associated illumination conditions in combination with information from the one or more additional information sources,
wherein the additional information sources comprise at least one of:
vehicle interior characteristics;
characteristics of the occupant;
vehicle location;
vehicle state; and
environmental conditions.

7. A monitoring system according to claim 6, wherein the characteristics of the occupant include at least one of body temperature, heart rate, breathing rate, and head position.

8. A monitoring system according to claim 6 or claim 7, wherein the vehicle interior characteristics include air temperature, air quality, and audio captured by one or more microphones.

9. A monitoring system according to any one of claims 6 to 8, wherein the vehicle state comprises speed, acceleration, heading, and steering wheel position.

10. A monitoring system according to any one of claims 6 to 9, wherein the interpretation module is arranged to determine the presence of external structures affecting illumination conditions from the vehicle location and map information.

11. A monitoring system according to any one of claims 7 to 10, wherein the environmental conditions include weather conditions, time of day, time of year, and angle of sunlight.

12. A monitoring system according to any one of the preceding claims, wherein the interpretation module is arranged to resolve the occupant's condition into one or more of:
a temporary condition in which one or more characteristics of the occupant's eyes are temporarily affected by a change in illumination conditions;
a critical condition in which one or more characteristics of the occupant's eyes have low dependence or no dependence on illumination conditions;
wherein the interpretation module causes a first vehicle function to be performed if a temporary condition is detected, and causes a second vehicle function to be performed if a critical condition is detected.

13. A monitoring system according to claim 12, wherein the first vehicle function includes one or more of braking, limiting maximum speed, increasing a level of lane-keeping assistance, outputting a warning notification, activating an anti-glare system; and
wherein the second vehicle function includes one or more of a parking manoeuvre, activating hazard lights, limiting vehicle engine function, requesting assistance from a remote entity, and one or more vehicle or occupant safety protocols.

14. A monitoring system according to any one of the preceding claims, wherein the interpretation module is arranged to initiate determination of one or more characteristics of the occupant's eyes in response to determining a change in illumination conditions.

15. A monitoring method, comprising:
determining illumination conditions of the interior of a vehicle;
obtaining one or more characteristics of eyes an occupant of the vehicle;
determining a condition of the occupant based on the characteristics of the occupant's eyes and the associated illumination conditions, and causing a vehicle function to be performed in dependence upon the condition of the occupant.
